# EUROPÄISCHE PATENTSCHRIFT

(11) **EP 0 506 831 B1**
(45) Veröffentlichungstag und Bekanntmachung des Hinweises auf die Patenterteilung: **10.08.1994**
(21) Anmeldenummer: 91902119.6
(22) Anmeldetag: 18.12.1990
(51) Int. Cl.: C01B 25/16, C08K 3/32

(54) **BASISCHE CALCIUM-ALUMINIUM-HYDROXY-PHOSPHITE, VERFAHREN ZU DEREN HERSTELLUNG UND DEREN VERWENDUNG**
BASIC CALCIUM ALUMINIUM HYDROXYPHOSPHITES, METHOD OF PRODUCTION THEREOF AND THEIR USE
PHOSPHITES BASIQUES DE CALCIUM-ALUMINIUM-HYDROXY, LEUR PROCEDE DE FABRICATION ET LEUR UTILISATION

(30) Priorität: 19.12.1989 DE 3941902
(43) Veröffentlichungstag der Anmeldung: 07.10.1992
(73) Patentinhaber: Bärlocher GmbH, D-80992 München (DE)
(72) Erfinder: RAZVAN, Coriolan, D-8000 München 50 (DE); BECK, Reinhard, D-8000 München 60 (DE); KÜRZINGER, Alfred, D-8000 München 71 (DE); PÜRZER, Albert, W., D-8000 München 21 (DE); ROSENTHAL, Michael, D-8000 München 40 (DE)
(74) Vertreter: Grünecker, Kinkeldey, Stockmair & Schwanhäusser Anwaltssozietät
(86) Internationale Anmeldenummer: EP9002227
(87) Internationale Veröffentlichungsnummer: WO9108984

(56) Entgegenhaltungen:
- FR-A- 2 592 386
- GB-A- 1 146 467

## Beschreibung

Die Erfindung betrifft basische Calcium-Aluminium-Hydroxy-Phosphite, ein Verfahren zu deren Herstellung und deren Verwendung als Stabilisatoren für halogenhaltige Polymere, insbesondere Polyvinylchlorid.

Halogenhaltige, thermoplastische Harzzusammensetzungen oder daraus hergestellte Formteile, werden durch Einwirkung von Hitze oder Licht abgebaut bzw. zersetzt. Deshalb müssen diesen Harzen Stabilisatoren zugesetzt werden. Für besonders anspruchsvolle Artikel, wie Profile, Platten oder Rohre, werden hierfür üblicherweise anorganische und/oder organische Verbindungen von toxischen Schwermetallen wie Blei, Barium oder Cadmium verwendet. Eine besondere Bedeutung bei der Stabilisierung von z.B. Hart-PVC-Artikeln, wo gute thermische und gute Licht- und Wetterbeständigkeit gefordert werden, hat 2-basisches Bleiphosphit erlangt. So wird beispielsweise in der DD-A- 61 095 die Verwendung von basischem Bleiphosphit als Stabilisator gegen den Abbau von PVC durch Hitze, Tageslicht und UV-Strahlung beschrieben. Die CH-A- 8 510 622 beschreibt die Stabilisierung von hochgefüllten Hart- und Weich-PVC Produkten mit einer Mischung aus basischem Bleisulfat und Bleiphosphit. Eine andere Verwendung des basischen Bleiphosphits für PVC-Hartschaum-Mischungen ist in der US-A- 4 797 426 beschrieben.

Da basisches Bleiphosphit ebenso wie andere schwermetallhaltige Stabilisatoren als toxisch eingestuft wird, versucht man Stabilisierungsalternativen zu finden. Es ist eine Vielzahl von Kombinationen aus anorganischen und organischen Verbindungen als Stabilisator für halogenhaltige, thermoplastische Harze bekannt. In der JP-B- 1 213 865 und in der JP-A- 80 445/80 wird ein Hydrotalcit als Stabilisator vorgeschlagen. Diese Substanz ist Mischungen aus Ca/Zn-Metallseifen, was die Hitzestabilität und die Transparenz betrifft, überlegen. Jedoch kann durch die Verwendung von Hydrotalcit das Problem der Verfärbung des Harzes während der Verarbeitung nicht gelöst werden. Gemäß JP-A- 80 444/82 wird vorgeschlagen, zur Überwindung dieses Problems Kombinationen aus Hydrotalcit und 1,3-Diketonverbindungen zu verwenden. Hydrotalcite haben darüber hinaus den Nachteil, daß sie bei den für PVC üblichen Verarbeitungstemperaturen Wasser und Kohlendioxid abspalten. In der EP-A- 0 256 872 wird vorgeschlagen, diesen Nachteil durch die Zugabe von feinstteiligem Magnesiumoxid zu beheben. Die FR-A- 2 593 386 beschreibt die Verwendung von Erdalkali- oder Alkaliphosphiten, wie Calciumphosphiten, zur Stabilisierung halogenhaltiger Harze.

Der Erfindung liegt die Aufgabe zugrunde, neue Verbindungen sowie ein Verfahren zu deren Herstellung zur Verfügung zu stellen, die sich insbesondere als Stabilisatoren für halogenhaltige Polymere eignen, ohne die oben erwähnten Nachteile der bekannten Stabilisatoren aufzuweisen, insbesondere als nichttoxisch eingestuft werden.

Diese Aufgabe wird erfindungsgemäß gelöst durch die Bereitstellung basischer Calcium-Aluminium-Hydroxy-Phosphite der allgemeinen Formel

CaₓAl₂(OH)₂₍ₓ₊₂₎HPO₃.mH₂O

worin x = 2-8 und m = 0-12.

In der obigen Formel bedeutet x vorzugsweise 3-6 und m bedeutet vorzugsweise 2-4.

Untersuchungen mittels Röntgenbeugung haben gezeigt, daß die erfindungsgemäßen Verbindungen hinsichtlich ihrer Kristallstruktur nicht dem Hydrotalcit-Typ angehören.

Überraschenderweise hat sich gezeigt, daß die erfindungsgemäßen Calcium-Aluminiun-Hydroxy-Phosphite halogenhaltigen, thermoplastischen Harzen und den daraus hergestellten Formteilen vergleichbare Hitzestabilitäten wie basische Bleiphosphite verleihen. Die erfindungsgemäßen Verbindungen verhindern Verfärbungen bei der Herstellung von z.B. Hart-PVC-Formteilen, auch die Farbhaltung und die Bewitterungsstabilität der mit den erfindungsgemäßen Verbindungen stabilisierten Formteile ist den mit toxischen Schwermetallverbindungen stabilisierten Produkten gleichwertig.

Gegenstand der Erfindung ist ebenso ein Verfahren zur Herstellung der erfindungsgemäßen Calcium-Aluminium-Hydroxy-Phosphite, das dadurch gekennzeichnet ist, daß man Mischungen aus Calciumhydroxid und/oder -oxid, Aluminiumhydroxid und Natriumhydroxid oder aus Calciumhydroxid und/oder -oxid und Natriumaluminat mit Phosphoriger Säure in zur Herstellung der erwünschten Verbindungen entsprechenden Mengen in wäßrigem Medium umsetzt und das Reaktionsprodukt in an sich bekannter Weise abtrennt und gewinnt.

Das aus der oben beschriebenen Umsetzung direkt anfallende Reaktionsprodukt kann nach bekannten Verfahren vom wäßrigen Reaktionsmedium abgetrennt werden, vorzugsweise durch Filtration. Die Aufarbeitung des abgetrennten Reaktionsprodukts erfolgt ebenfalls in an sich bekannter Weise, beispielsweise durch Waschen des Filterkuchens mit Wasser und Trocknen des gewaschenen Rückstands bei Temperaturen von beispielsweise 60-130° C, vorzugsweise bei 90-120° C.

Für die Umsetzung kann sowohl ein feinteiliges, aktives Aluminiumhydroxid in Kombination mit Natriumhydroxid, als auch ein Natriumaluminat eingesetzt werden. Calcium kann in Form von feinteiligem Calciumoxid oder -hydroxid oder Mischungen daraus verwendet werden. Die Phosphorige Säure kann in unterschiedlicher konzentrierter Form eingesetzt werden.

Die Umsetzungstemperaturen liegen vorzugsweise zwischen etwa 50 und 100° C, weiter vorzugsweise zwischen etwa 60 und 85° C. Katalysatoren oder Beschleuniger sind nicht erforderlich. Bei den erfindungsgemäßen Verbindungen kann das Kristallwasser ganz oder teilweise durch thermische Behandlung entfernt werden.

Bei iher Anwendung als Stabilisatoren spalten die erfindungsgemäßen, getrockneten Calcium-Aluminium-Hydroxy-Phosphite bei den bspw. für Hart-PVC üblichen Verarbeitungstemperaturen von 160-200° C kein Wasser ab, so daß in den Formteilen keine störende Blasenbildung auftritt.

Zur Verbesserung ihrer Dispergierbarkeit in halogenhaltigen thermoplastischen Harzen können die erfindungsgemäßen Verbindungen in bekannter Weise mit oberflächenaktiven Mitteln gecoatet werden.

Gemäß der Erfindung können mit den erfindungsgemäßen Calcium-Aluminium-Hydroxy-Phosphiten halogenhaltige, thermoplastische Harze stabilisiert werden. Insbesondere eignen sich hierfür in bekannter Weise hergestellte Polyvinylchloride, Homo- und Co-Polymere davon sowie deren Abmischungen mit anderen Polymeren, wie z.B. ABS (Acrylnitril/Butadien/Styrol), CPVC (nachchloriertes PVC), Acrylate und dergleichen.

Zusätzlich zu den erfindungsgemäßen Verbindungen können selbstverständlich weitere Additive in das Harz eingearbeitet werden. Beispiele für solche Additive sind Organozinnverbindungen, organische Phosphite, Epoxiverbindungen, Aminoverbindungen, mehrwertige Alkohole, Metallseifen von C₈-C₂₂-Fettsäuren mit Metallen wie Ca, Zn, Mg oder Al, Antioxidantien, Ultraviolettabsorber, Carbonylverbindungen, Antistatika, Schmiermittel, Weichmacher, Wachse, Pigmente und Füllstoffe.

Die nachstehenden Beispiele erläutern die Erfindung.

### A) Herstellung der basischen Calcium-Aluminium-Hydroxy-Phosphite

### Beispiel 1

Eine wässrige Suspension (5,2 l) aus 222 g Calciumhydroxid (3 Mol), 80 g Natriumhydroxid (2 Mol) und 156 g aktives Aluminiumhydroxid (2 Mol) wird auf 60° C erwärmt. Anschließend werden 234,3 g Phosphorige Säure (2 Mol) in Form einer 70 %igen wäßrigen Lösung, mit gleichmäßiger Zulaufgeschwindigkeit im Laufe von 30 Minuten unter Rühren und Beibehalten der Temperatur zugesetzt. Daraufhin wird die Suspension auf 85° C erwärmt und bei dieser Temperatur 3 Stunden unter Rühren gehalten. 10 Minuten vor Ende der Reeaktionszeit werden 5 g Natriumstearat zur Coatung Zugegeben. Die so erhaltene Suspension wird abfiltriert, mit 1,5 l Wasser gewaschen und der Filterkuchen in einen Trockenschrank bei 115° C 3 Stunden getrocknet.

Die Analysenwerte des so hergestellten Produkts werden unten angegeben.

| Molarverhältnis | Gefundener Wert | Berechneter Wert |
|---|---|---|
| Ca | 3,1 | 3 |
| Al | 1,9 | 2 |
| P | 1,2 | 1 |

### Beispiel 2

Eine wäßrige Suspension (6,4 l) aus 296 g Calciumhydroxid (4 Mol) und 164 g Natriumaluminat (2 Mol) wird auf 50° C erwärmt. Anschließend werden 234,3 g Phosphorige Säure (2 Mol) in Form einer 70 %igen wäßrigen Lösung mit gleichmäßiger Zulaufgeschwindigkeit im Laufe von 30 Minuten unter Rühren und Beibehalten der Temperatur zugesetzt. Daraufhin wird die Suspension auf 85° C erwärmt und bei dieser Temperatur 3 Stunden unter Rühren gehalten. 10 Minuten vor Ende der Reaktionszeit werden 6 g Natriumstearat zur Coatung zugegeben. Die so erhaltene Suspension wird abfiltriert, mit 1,5 l Wasser gewaschen und der Filterkuchen in einem Trockenschrank bei 115° C 3 Stunden getrocknet.

Die Analysenwerte des so hergestellten Produktes werden unten angegeben.

| Molarverhältnis | Gefundener Wert | Berechneter Wert |
|---|---|---|
| Ca | 4,05 | 4,0 |
| Al | 1,85 | 2,0 |
| P | 1,15 | 1,0 |

### Beispiel 3

Eine wäßrige Suspension (7,2 l) aus 444 g Calciumhydroxid (6 Mol) und 164 g Natriumaluminat (2 Mol) wird auf 50° C erwärmt. Anschließend werden 234,3 g Phosphorige Säure (2 Mol) in Form einer 70 %igen wäßrigen Lösung mit gleichmäßiger Zulaufgewschwindigkeit im Laufe von 30 Minuten unter Rühren und Beibehalten der Temperatur zugegeben.

Daraufhin wird die Suspension auf 85° C erwärmt und bei dieser Temperatur 4 Stunden unter Rühren gehalten. 10 Minuten vor Ende der Reaktionszeit werden 8 g Natriumstearat zur Coatung zugegeben. Die so erhaltene Suspension wird abfiltriert mit 1,8 l Wasser gewaschen und der Filterkuchen in einem Trockenschrank bei 115° C 3 Stunden getrocknet.

Die Analysenwerte des so gewonnenen Produktes werden unten angegeben:

| Molarverhältnis | Gefundener Wert | Berechneter Wert |
|---|---|---|
| Ca | 6,1 | 6 |
| Al | 1,8 | 2 |
| P | 1,2 | 1 |

### B) Verwendung der erfindungsgemäßen Verbindungen als Stabilisatoren

In den folgenden Beispielen wird die Wärmestabilität, die Ultraviolettstabilität und die Anfangsfarbe von PVC-Formkörepern, denen die erfindungsgemäßen Verbindungen zugesetzt worden sind, bewertet.

Für die Bewertung der Wärmestabilität wird die PVC-Harzmasse auf einem Laborwalzwerk 5 Minuten bei 180° C homogenisiert und plastifiziert. Aus dem so hergestellten, etwa 1 mm dicken Fell, werden quadratische Probeblättchen von 15 mm Kantenlänge geschnitten. Diese Probeblättchen werden im Wärmeschrank bei 180° C getempert. Im Abstand von 10 Minuten wird je ein Blättchen entnommen und auf einer Testkarte aufgeheftet. Dieser Vorgang wird so oft wiederholt, bis die Probeblättchen schwarz verfärbt sind.

Für die Bewertung der Ultraviolettstabilität werden von einem wie oben hergestellten Fell quadratische Stücke von auf eine Kantenlänge geschnitten. Mehrere dieser Stücke werden auf eine polierte und verchromte Stahlplatte gestapelt, mit einem Metallrahmen von 2 mm Dicke umschlossen und mit einer ebenfalls polierten und verchromten Stahlplatte abgedeckt. In einer beheizten Presse werden so Probekörper von genau definierter Dicke und glatter Oberfläche hergestellt. Diese Proben werden in einem Xenotest-Gerät nach DIN 53388 belichtet. Die Zeit, die verstreicht, bis die Probe ihre Anfangsfarbe deutlich geändert hat, wird bestimmt. Je länger diese Zeit ist, desto höher ist die Ultraviolettstabilität.

Die Angangsfarbe wurde direkt von den oben beschriebenen, gepreßten Formkörpern beurteilt.

### Beispiel 4

| | Gewichtsteile | | | | | | | |
|---|---|---|---|---|---|---|---|---|
| | A | B | C | D | E | F | G | H |
| PVC (K 68) | 100 | 100 | 100 | 100 | 100 | 100 | 100 | 100 |
| Schlagfestzusatz* | 10 | 10 | 10 | 10 | 10 | 10 | 10 | 10 |
| Kreide | 5 | 5 | 5 | 5 | 5 | 5 | 5 | 5 |
| TiO₂ | 4 | 4 | 4 | 4 | 4 | 4 | 4 | 4 |
| Distearylphthalat | 0,5 | 0,5 | 0,5 | 0,5 | 0,5 | 0,5 | 0,5 | 0,5 |
| Bisphenol A | 0,2 | 0,2 | 0,2 | 0,2 | 0,2 | 0,2 | 0,2 | 0,2 |
| Phenyldidecylphosphit | 0,3 | 0,3 | 0,3 | 0,3 | 0,3 | 0,3 | 0,3 | 0,3 |
| Bleistearat | 0,8 | 0,8 | - | - | - | - | - | - |
| 2PbOPbHPO₃ ·0,5H₂O | 2,0 | 3 | - | - | - | - | - | - |
| Zinkstearat | - | - | 0,6 | 0,6 | 0,6 | 0,6 | 0,6 | 0,6 |
| Calciumlaurat | - | - | 0,8 | 0,8 | 0,8 | 0,8 | 0,8 | 0,8 |
| Ca₃Al₂(OH)₁₀HPO₃ ·2H₂O | - | - | 2,5 | 4,0 | - | - | - | - |
| Ca₄Al₂(OH)₁₂HPO₃ ·3H₂O | - | - | - | - | 2,5 | 4,0 | - | - |
| Ca₆Al₂(OH)₁₆HPO₃ ·3H₂O | - | - | - | - | - | - | 2,5 | 4,0 |

| | | | | | | | | |
|---|---|---|---|---|---|---|---|---|
| * Bärodur EST-3 | | | | | | | | |

Die obigen Zusammensetzungen von A bis H wurden nach den angegebenen Methoden hergestellt und getestet. Die Ergebnisse sind in der Tabelle I und II zusammengefaßt.

**Tabelle I**

| Ergebnisse der Bewertung der thermischen Stabilität | | | | | | | | | | | |
|---|---|---|---|---|---|---|---|---|---|---|---|
| | Zeit (min.) | | | | | | | | | | |
| Zusammen setzung | 0 | 10 | 20 | 30 | 40 | 60 | 80 | 100 | 120 | 150 | 200 |
| A | 1 | 1 | 1 | 1 | 4 | 6 | 7 | 7 | 8 | - | - |
| B | 1 | 1 | 1 | 1 | 1 | 1 | 4 | 4 | 7 | 7 | 8 |
| C | 1 | 1 | 1 | 1 | 2 | 3 | 5 | 7 | 8 | - | - |
| D | 1 | 1 | 1 | 1 | 1 | 2 | 3 | 3 | 7 | 7 | 8 |
| E | 1 | 1 | 1 | 2 | 3 | 3 | 7 | 7 | 8 | - | - |
| F | 1 | 1 | 1 | 2 | 2 | 3 | 3 | 3 | 7 | 7 | 8 |
| G | 1 | 1 | 1 | 2 | 3 | 3 | 3 | 3 | 8 | - | - |
| H | 1 | 1 | 2 | 3 | 3 | 3 | 3 | 3 | 3 | 7 | 8 |
| 1 = weiß; 2 = schwach gelb; 3 = gelb; 4 = schwach grau; 5 = orange; 6 = grau; 7 = braun; 8 = schwarz. | | | | | | | | | | | |

**Tabelle II**

| Ergebnisse der Bewertung der Lichtstabilität | | | | | | |
|---|---|---|---|---|---|---|
| | Zeit (Stunden) | | | | | |
| Zusammensetzung | 0 | 500 | 1000 | 1500 | 2000 | 4000 |
| A | 1 | 1 | 1 | 1 | 3 | 5 |
| B | 1 | 1 | 1 | 1 | 1 | 4 |
| C | 1 | 1 | 1 | 1 | 2 | 4 |
| D | 1 | 1 | 1 | 1 | 1 | 4 |
| E | 1 | 1 | 1 | 1 | 2 | 3 |
| F | 1 | 1 | 1 | 1 | 1 | 3 |
| G | 1 | 1 | 1 | 2 | 3 | 6 |
| H | 1 | 1 | 1 | 1 | 1 | 6 |
| 1 = weiß; 2 = schwach gelb; 3 = schwach grau; 4 = gelb; 5 = grau; 6 = braun. | | | | | | |

### Beispiel 5

| | Gewichtsteile | | | | |
|---|---|---|---|---|---|
| | I | J | K | L | M |
| PVC (K 68) | 100 | 100 | 100 | 100 | 100 |
| Schlagfestzusatz* | 10 | 10 | 10 | 10 | 10 |
| Kreide | 5 | 5 | 5 | 5 | 5 |
| TiO2 | 4 | 4 | 4 | 4 | 4 |
| Distearylphthalat | 0,5 | 0,5 | 0,5 | 0,5 | 0,5 |
| Bisphenol | 0,2 | 0,2 | 0,2 | 0,2 | 0,2 |
| Phenyldidecylphosphit | 0,3 | 0,3 | 0,3 | 0,3 | 0,3 |
| Zinkstearat | 0,6 | 0,6 | 0,6 | 0,6 | 0,6 |
| Calciumlaurat | 0,8 | 0,8 | 0,8 | 0,8 | 0,8 |
| Ca₄Al₂(OH)₁₂HPO₃ · 3H₂O | 2,5 | 2,5 | 2,5 | 2,5 | 2,5 |
| Pentaerythrit | - | 0,5 | - | - | - |
| Epoxidiertes Sojaöl | - | - | 2,0 | - | - |
| Ethylaminocrotonat | - | - | - | 0,3 | - |
| Dibenzoylmethan | - | - | - | - | 0,1 |

| | | | | | |
|---|---|---|---|---|---|
| * Barodur EST-3 | | | | | |

Die obigen Zusammensetzungen von I bis M wurden noch den angegebenen Methoden hergestellt und getestet. Die Ergebnisse sind in der Tabelle III und IV angegeben.

**Tabelle III**

| Ergebnisse der Bewertung der thermischen Stabilität. | | | | | | | | | | | |
|---|---|---|---|---|---|---|---|---|---|---|---|
| | Zeit (min.) | | | | | | | | | | |
| Zusammensetzung | 0 | 10 | 20 | 30 | 40 | 60 | 80 | 100 | 120 | 150 | 200 |
| I | 1 | 1 | 1 | 2 | 3 | 3 | 5 | 5 | 6 | - | - |
| J | 1 | 1 | 2 | 3 | 3 | 3 | 4 | 4 | 5 | 6 | - |
| K | 1 | 1 | 1 | 1 | 2 | 3 | 3 | 3 | 3 | 3 | 5 |
| L | 1 | 1 | 1 | 1 | 1 | 6 | - | - | - | - | - |
| M | 1 | 1 | 1 | 1 | 1 | 1 | 3 | 4 | 5 | 5 | 6 |
| 1 = weiß; 2 = schwach gelb; 3 = gelb; 4 = orange; 5 = braun; 6 = schwarz. | | | | | | | | | | | |

**Tabelle IV**

| Ergebnisse der Bewertung der Anfangsfarbe | |
|---|---|
| Zusammensetzung | Augenmaß Beurteilung |
| I | gut |
| J | ausreichend |
| K | gut |
| L | sehr gut |
| M | sehr gut |

### Beispiel 6

| | Gewichtsteile | | | |
|---|---|---|---|---|
| | N | O | P | R |
| PVC K 70 | 100 | 100 | 100 | 100 |
| Dioctylphthalat | 40 | 40 | 40 | 40 |
| Kreide | 30 | 30 | 30 | 30 |
| Bleistearat | 0,6 | - | - | - |
| 2 basisches Bleiphosphit | 2,0 | - | - | - |
| Zinkstearat | - | 0,3 | 0,3 | 0,3 |
| Calciumstearat | - | 0,6 | 0,6 | 0,6 |
| Ca₃Al₂(OH)₁₀HPO₃ · 2H₂O | - | 2,5 | - | - |
| Ca₄Al₂(OH)₁₂HPO₃ · 3H₂O | - | - | 2,5 | - |
| Ca₆Al₂(OH)₁₆HPO₃ · 3H₂O | - | - | - | 2,5 |

Die obigen Zusammensetzungen von N bis R wurden nach der oben genannten Methode hergestellt und die thermische Stabilität beurteilt. Die Ergebnisse sind in Tabelle V zusammengefaßt.

**Tabelle V**

| | Zeit (min.) | | | | | | | | | | |
|---|---|---|---|---|---|---|---|---|---|---|---|
| Zusammensetzung | 0 | 10 | 20 | 40 | 60 | 80 | 120 | 160 | 180 | 200 | 220 |
| N | 1 | 1 | 1 | 2 | 2 | 2 | 2 | 3 | 3 | 4 | - |
| O | 1 | 1 | 1 | 1 | 1 | 2 | 3 | 3 | 4 | - | - |
| P | 1 | 1 | 1 | 1 | 2 | 2 | 2 | 3 | 3 | 4 | - |
| R | 1 | 1 | 1 | 2 | 2 | 2 | 3 | 3 | 3 | 3 | 4 |
| 1 = weiß; 2 = gelb; 3 = braun; 4 = schwarz. | | | | | | | | | | | |

## Patentansprüche

1. Basische Calcium-Aluminium-Hydroxy-Phosphite der allgemeinen Formel
CaₓAl₂(OH)₂₍ₓ₊₂₎HPO₃ . mH₂O
worin
x = 2-8 und
m = 0-12.

2. Phosphite nach Anspruch 1, worin x = 3-6.

3. Phosphite nach Anspruch 1 und/oder 2, worin m = 2-4.

4. Verfahren zur Herstellung der basischen Calcium-Aluminium-Hydroxy-Phosphite nach den Ansprüchen 1 bis 3, **dadurch gekennzeichnet**, daß man Mischungen aus Calciumhydroxid und/oder -oxid, Aluminiumhydroxid und Natriumhydroxid oder aus Calciumhydroxid und/oder -oxid und Natriumaluminat mit Phosphoriger Säure in zur Herstellung der erwünschten Verbindungen entsprechenden Mengen in wäßrigem Medium umsetzt und das Reaktionsprodukt in an sich bekannter Weise abtrennt und gewinnt.

5. Verfahren nach Anspruch 4,
**dadurch gekennzeichnet**,
daß die Umsetzung bei einer Temperatur zwischen etwa 50 und 100° C durchgeführt wird.

6. Verwendung der basischen Calcium-Aluminium-Hydrory-Phosphite gemäß den Ansprüchen 1 bis 3 als Stabilisatoren für halogenhaltige Polymere, insbesondere Polyvinylchlorid.

## Claims

1. Basic calcium aluminium hydroxy-phosphites of the general formula
CaₓAl₂(OH)₂₍ₓ₊₂₎HPO₃ · mH₂O
where
x = 2-8 and
m = 0-12.

2. Phosphites according to Claim 1, where x = 3-6.

3. Phosphites according to Claim 1 and/or 2, where m = 2-4.

4. Process for the preparation of the basic calcium aluminium hydroxy-phosphites according to Claims 1 to 3, characterized in that mixtures of calcium hydroxide and/or oxide, aluminium hydroxide and sodium hydroxide or of calcium hydroxide and/or oxide and sodium aluminate are reacted with phosphorous acid in amounts appropriate for preparation of the desired compounds in an aqueous medium and the reaction product is separated off and isolated in a manner known per se.

5. Process according to Claim 4, characterized in that the reaction is carried out at a temperature of between about 50 and 100°C.

6. Use of the basic calcium aluminium hydroxy-phosphites according to Claims 1 to 3 as stabilizers for halogen-containing polymers, in particular polyvinyl chloride.

## Revendications

1. Phosphites basiques de calcium-aluminium-hydroxy de la formule générale
CaₓAl₂(OH)₂₍ₓ₊₂₎HPO₃.mH₂O
où
x = 2 à 8, et
m = 0 à 12.

2. Phosphites suivant la revendication 1, où x = 3 à 6.

3. Phosphites suivant la revendication 1 et/ou 2, où m = 2 à 4.

4. Procédé de fabrication des phosphites basiques de calcium-aluminium-hydroxy suivant les revendications 1 à 3, caractérisé en ce que l'on transforme des mélanges d'hydroxyde et/ou d'oxyde de calcium, d'hydroxyde d'aluminium et d'hydroxyde de sodium ou d'hydroxyde et/ou d'oxyde de calcium et d'aluminate de sodium avec de l'acide phosphoreux, en quantités correspondant aux liaisons souhaitées, dans un milieu aqueux et que l'on sépare et récupère le produit de la réaction de manière connue en soi.

5. Procédé suivant la revendication 4, caractérisé en ce que la transformation s'effectue à une température comprise entre environ 50 et 100°C.

6. Utilisation des phosphites basiques de calcium-aluminium-hydroxy suivant les revendications 1 à 3 comme stabilisateurs pour polymères à teneur en halogène, en particulier chlorure de polyvinyle.
